# EUROPEAN PATENT SPECIFICATION

(11) **EP 0 783 948 B1**
(45) Date of publication and mention of the grant of the patent: **17.10.2001**
(21) Application number: 97102377.5
(22) Date of filing: 13.08.1990
(51) Int. Cl.: B29C 45/16, B29C 45/32

(54) **Sequentially injected multi-component shuttle-stack injection molding**
Mehrkomponentenspritzgiessverfahren des Typs "Shuttle-Stack" mit sequentieller Injektion der Komponenten
Moulage par injection à plusieurs composants et à injection sequentielle du type "Shuttle-Stack"

(30) Priority: 14.08.1989 US 394228; 18.06.1990 US 539855
(43) Date of publication of application: 16.07.1997
(62) Divisional of application: 90913311.8
(73) Proprietor: SORENSEN, Jens Ole, Grand Cayman, CAYMAN ISLANDS (KY)
(72) Inventor: SORENSEN, Jens Ole, Grand Cayman, CAYMAN ISLANDS (KY)
(74) Representative: Wilson, Nicholas Martin

(56) References cited:
- EP-A- 0 068 596
- EP-A- 0 103 363
- US-A- 4 784 285
- PATENT ABSTRACTS OF JAPAN vol. 13, no. 334 (M-855), 27 July 1989 & JP 01 110918 A (OOSHITA SANGYO KK), 27 April 1989,

## Description

The present invention generally pertains to a method and an apparatus for multi-cavity injection molding of plastic products and is particularly directed to a highly efficient and highly controllable method and an apparatus for shuttle stack injection molding of multi-component plastic products.

Heretofore shuttle stack injection molding of multi-component plastic products was either carried out so that only two products were produced in each injection molding cycle, as described in United States Patent No. 4,935,184, with the resulting low efficiency, or alternatively so that at least two mold cavities were filled at the same time by the same injection unit, giving rise to unbalanced filling of the cavities.

The present invention enables production of four or more products in each production cycle while the filling of each cavity may be separate and therefore may be fully controlled.

The present invention provides a method of cyclic injection molding a multi-component product in an injection molding system comprising a mold positioning system, a first injection system and a second injection system, and a left molding block, a right molding block and an intermediate molding block located between the left and the right molding blocks, said blocks being disposed for axial movement in respect to each other,
the left molding block defining a first left general mold cavity part and the intermediate molding block defining a first left gated mold cavity part and a second left gated mold cavity part,
the right molding block defining a first right general mold cavity part and the intermediate molding block defining a first right gated mold cavity part and a second right gated mold cavity part,
the intermediate molding block defining a first runner system and a second runner system connected to said gated mold parts, the method comprising the steps of:
   (a) combining by the mold positioning system said molding blocks so that the first left general mold cavity part is connected with the first left gated mold cavity part to form a first left mold cavity,
   (b) injecting by the first injection system via the first runner system a first fluid plastic material into the first left mold cavity, and solidifying the material to produce a first left plastic component,
   (c) separating by the mold positioning system the right and intermediate molding blocks,
   (d) combining by the mold positioning system said molding blocks so that the first right general mold cavity part is connected with the first right gated mold cavity part to form a first right mold cavity,
   (e) injecting by the first injection system via the first runner system first fluid plastic material into the first right mold cavity, and solidifying the material to produce a first right plastic component,
   (f) separating by the mold positioning system the left and intermediate molding blocks, retaining the first left plastic component on the first left general mold cavity part,
   (g) combining by the mold positioning system said molding blocks so that the first left general mold cavity part is connected with the second left gated mold cavity part to form a second left mold cavity, which encompasses said first left plastic component,
   (h) injecting by the second injection system via the second runner system a second fluid plastic material into the second left mold cavity so that the second fluid plastic is united with the first left plastic component and solidifying the material to mold a first left multi-component plastic product,
   (i) separating by the mold positioning system the right and intermediate molding blocks, retaining the first right plastic component on the first right general mold cavity part,
   (j) combing by the mold positioning system said molding blocks so that the first right general mold cavity part is connected with the second right gated mold cavity part to form a second right mold cavity, which encompasses said first right plastic component,
   (k) injecting by the second injection system via the second runner system second fluid plastic material into the second right mold cavity so that the second fluid plastic is united with the first right plastic component and solidifying the material to mold a first right multi-component plastic product,
   (l) separating by the mold positioning system the left and intermediate molding blocks, to eject the first left product molded in step (h),
      wherein step (c) comprises the step of
   (m) ejecting a first right product molded in step (k) of the preceding molding cycle.

In a preferred embodiment, wherein additional the left molding block defines at least one second left general mold cavity part and the right molding block defines at least one second right general mold cavity part, the method additionally comprising the steps of:
wherein step (g) comprises the step of
   (n) combining by the mold positioning system said molding blocks so that one of said at least one second left general mold cavity part is connected with the first left gated mold cavity part to form a third left mold cavity,
wherein step (h) comprises the step of
   (o) injecting by the first injection system via the first runner system first fluid plastic material into the third left mold cavity, and solidifying the material to produce a second left plastic component,
wherein step (i) comprises the step of
   (p) separating by the mold positioning system the right and intermediate molding blocks,
wherein step (j) comprises the step of
   (q) combining by the mold positioning system said molding blocks so that one of said at least one second right general mold cavity part is connected with the first right gated mold cavity part to form a third right mold cavity,
wherein step (k) comprises the step of
   (r) injecting by the first injection system via the first runner system first fluid plastic material into said third right mold cavity, and solidifying the material to produce a second right plastic component,
wherein step (l) comprises the step of
   (s) separating by the mold positioning system the left and intermediate molding blocks, retaining the second left plastic component on said second left general mold cavity part,
wherein step (a) of the following cycle comprises the step of
   (t) combining by the mold positioning system said molding blocks so that any one of said at least one left general mold cavity part is connected with the second left gated mold cavity part to form a fourth left mold cavity, which encompasses said second left plastic component,
wherein step (b) of the following cycle comprises the step of
   (u) injecting by the second injection system via the second runner system second fluid plastic material into the fourth left mold cavity so that the second fluid plastic is united with the second left plastic component and solidifying the material to mold a second left multi-component plastic product,
wherein step (c) of the following cycle comprises the step of
   (v) separating by the mold positioning system the right and intermediate molding blocks, retaining the second right plastic component on any one of said at least one right general mold cavity part,
wherein step (d) of the following cycle comprises the step of
   (w) combining by the mold positioning system said molding blocks so that any one of said at least one right general mold cavity part is connected with the second right gated mold cavity part to form a fourth right mold cavity, which encompasses said second right plastic component,
wherein step (e) of the following cycle comprises the step of
   (x) injecting by the second injection system via the second runner system second fluid plastic material into the fourth right mold cavity so that the second fluid plastic is united with the second right plastic component and solidifying the material to mold a second right multi-component plastic product,
wherein step (f) of the following cycle comprises the step of
   (y) separating by the mold positioning system the left and intermediate molding blocks, to eject the second left product molded in step (u),
wherein step (p) comprises the step of
   (z) ejecting a second right product molded in step (e).

Additional features of the present invention are described in relation to the description of the preferred embodiments.

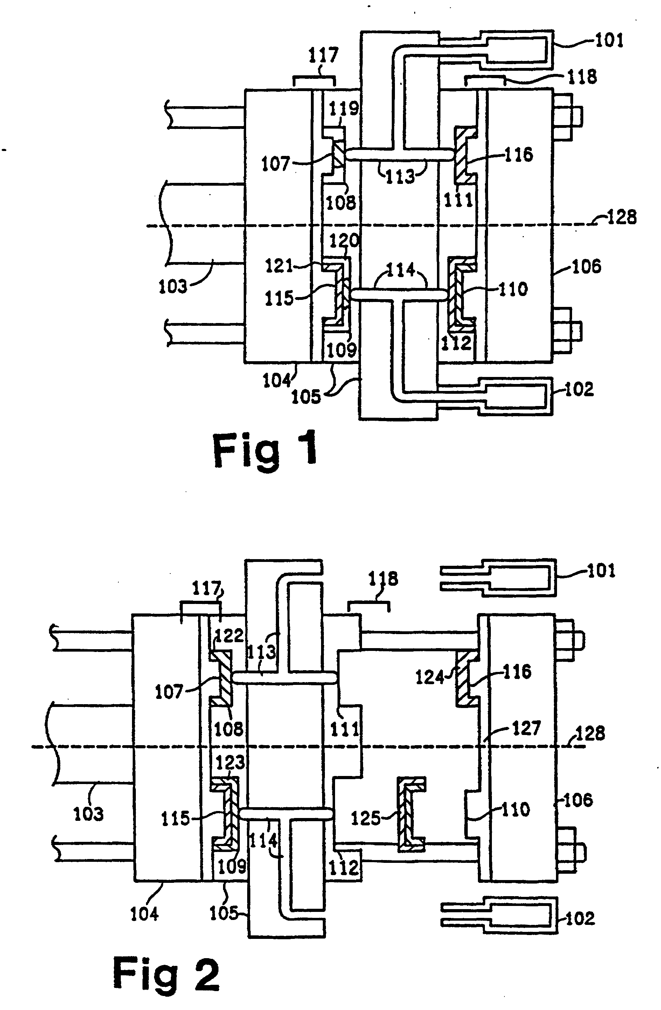

Figures 1 through 8 show within a cycle four chronological top sectional views of an injection molding system used for operating the cyclical method of the invention.

Referring to Figures 1 through 8 showing an injection molding system being a standard injection molding machine with two independent standard injection units 101,102. The injection molding system comprises a mold positioning system 103 being a standard clamping unit and a left and a right locking means 117,118 for locking the left molding block 104 together with the intermediate molding block 105 or for locking the right molding block 106 together with the intermediate molding block 105 respectively. A left molding block 104, a right molding block 106, and an intermediate molding block 105, located between the left and the right molding blocks 104,106 are disposed for axial movement in respect to each other. The left molding block 104 defines a first left general mold cavity part 107, a second left general mold cavity part 115 and the intermediate molding block 105 defines a first left gated mold cavity part 108 and a second left gated mold cavity part 109.

The right molding block 106 defines a first right general mold cavity part 110, a second right general mold cavity part 116 and the intermediate molding block defines a first right gated mold cavity part 111 and a second right gated mold cavity part 112.

The intermediate molding block 105 defines a first runner system 113 connected to the first left gated mold cavity part and the first right gated mold cavity part 108,111 and further defines a second runner system 114 connected to the second left gated mold cavity part and the second right gated mold cavity part 109,112.

The method comprises the following steps:

Figure 1. Combining by the mold positioning system 103 the molding blocks 104,105,106 so that the first left general mold cavity part 107 is connected with the first left gated mold cavity part 108 to form a first left mold cavity 119 and so that the second left general mold cavity part 115 is connected with the second left gated mold cavity part 109 to form a fourth left mold cavity 120, which encompasses a left plastic component 121 formed in the previous production cycle.

Injecting by the first injection system 101 via the first runner system 113 a first fluid plastic material into the first left mold cavity 119, and solidifying the material to produce a first left plastic component 122 and approximately at the same time injecting by the second injection system 102 via the second runner system 114 a second fluid plastic material into the fourth left mold cavity 120, so that the second fluid plastic is united with the second left plastic component 121, and solidifying the material to mold a second left multi-component plastic product 123.

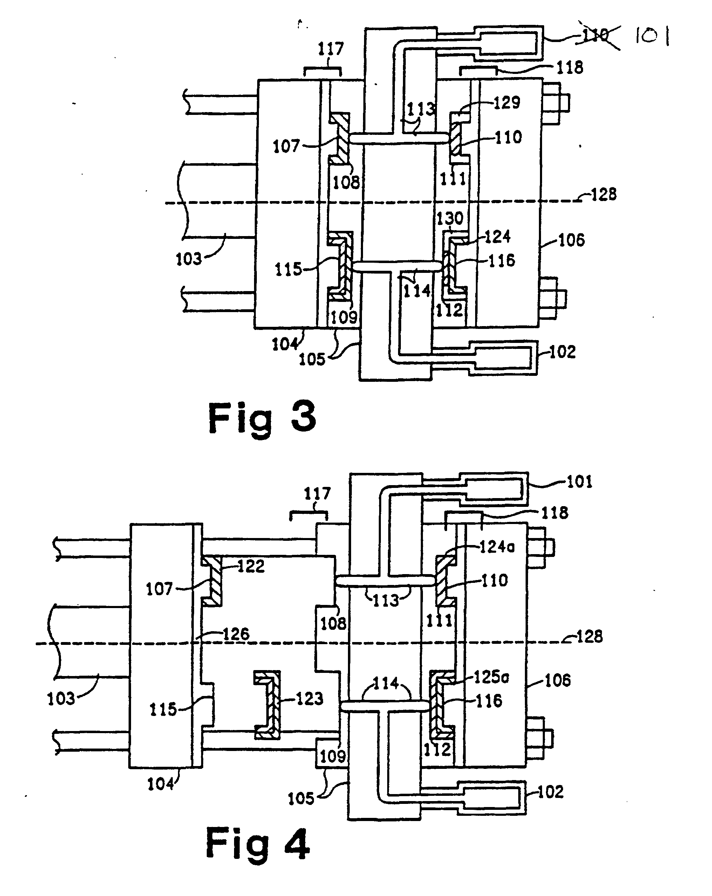

Figure 2. While locking together the left and intermediate molding blocks 104,105 and by the left locking means 117, separating by the mold positioning system 103 the right and intermediate molding blocks 106,105 and retaining a second right plastic component 124 formed in the previous cycle on the second right general mold cavity part 116, and ejecting a first right product 125 molded in the previous production cycle.

Rotating revolvable section 127 of the right molding block 106 pivoting around the centre axis 128 of the injection molding system by a right rotational means, not shown, and combining by the mold positioning system 103 molding blocks 104,105,106 so that the first right general mold cavity part 110 is connected with the first right gated mold cavity 111 to form a first right mold cavity 129, and so that the second right general mold cavity part 116 is connected with the second right gated mold cavity part 112 to form a fourth right mold cavity 130, which encompasses the second right plastic component 124.

Figure 3. Injecting by the first injection system 101 via the first runner system 113 first fluid plastic material into the first right mold cavity 129, and solidifying the material to produce a first right plastic component 124a and approximately at the same time injecting by the second injection system 102 via the second runner system 114 second fluid plastic material into the fourth right mold cavity 130 so that the second fluid plastic is united with the second right plastic component 124 and solidifying the material to mold a second right multi-component plastic product 125a.

Figure 4. While locking together the right and intermediate molding blocks 106,105 by the right locking means 118, separating by the mold positioning system 103 the left and intermediate molding blocks 104,105 and retaining the first left plastic component 122 on the first left general mold cavity part 107, and ejecting the second left product 123.

Rotating revolvable section 126 of the left molding block 104 pivoting around the centre axis 128 of the injection molding by the mold positioning system 103 molding blocks 104,105,106 so that the first left general mold cavity part 107 is connected with the second left gated mold cavity part 109 to form a second left mold cavity 132 which encompasses the first left plastic component 122, and so that the second left general mold cavity part 115 is connected with the first left gated mold cavity part 108 to form a third left mold cavity 131.

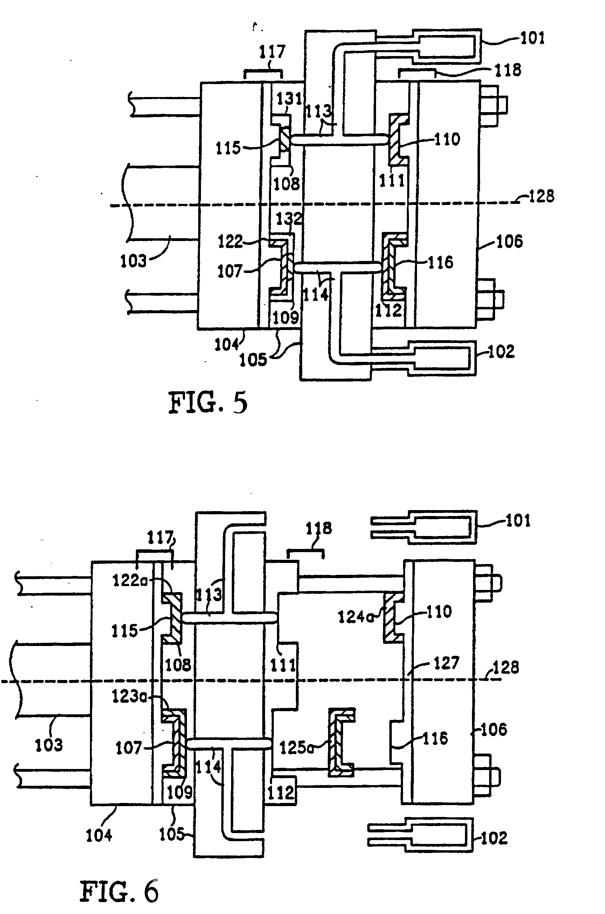

Figure 5. Injecting by the first injection system 101 via the first runner system 113 fluid plastic material into the third left mold cavity 131, and solidifying the material to produce a second left plastic component 122a and approximately at the same time injecting by the second injection system 102 via the second runner system 114 a second fluid plastic material into the second left mold cavity 132, so that the second fluid plastic is united with the first left plastic component 122 and solidifying the material to mold a first left multi-component plastic product 123a.

Figure 6. While locking together the left and intermediate molding blocks 104,105 by the left locking means 117, separating by the mold positioning system 103 the right and intermediate molding blocks 106,105 and retaining the first right plastic component 124a on the first right general mold cavity part 110, and ejecting second right product 125a.

Rotating revolvable section 127 of the right molding block 106 pivoting around the centre axis 128 of the injection molding system by a right rotational means, not shown, and combining by the mold positioning system 103 molding blocks 104,105,106 so that the second right general mold cavity part 116 is connected with the first right gated mold cavity part 111 to form a third right mold cavity 133, and so that the first right general mold cavity part 110 is connected with the second right gated mold cavity part 112 to form a second right mold cavity 134, which encompasses the first right plastic component 124a.

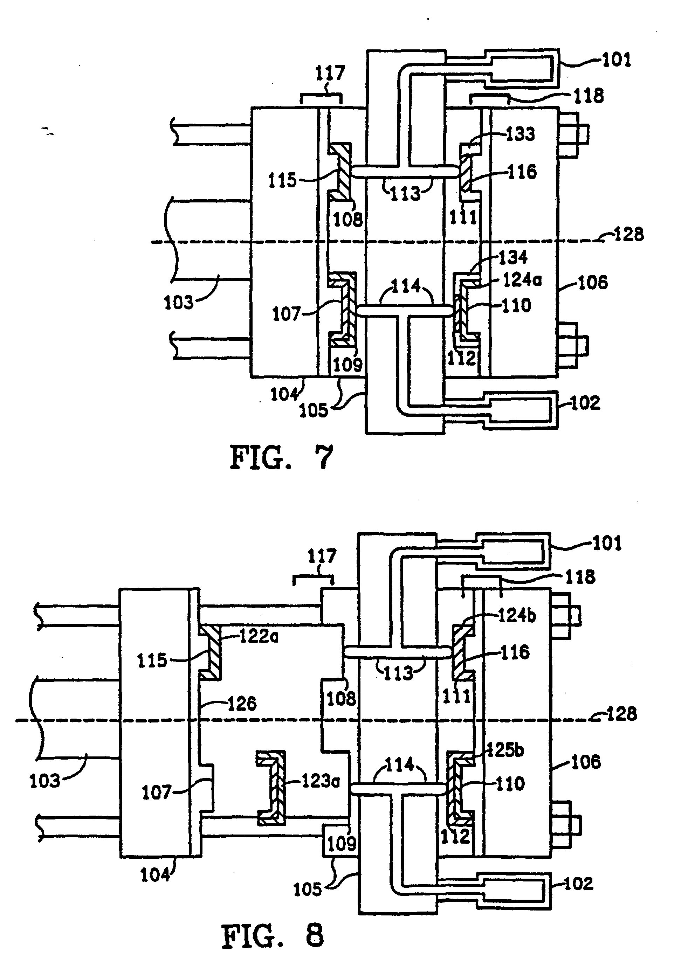

Figure 7. Injecting by the first injection system 101 via the first runner system 113 first fluid plastic material into the third right mold cavity 133, and solidifying the material to produce a second right plastic component 124b and approximately at the same time injecting by the second injection system 102 via the second runner system 114 second fluid plastic material into the second right mold cavity 134 so that the second fluid plastic is united with the first right plastic component 124a and solidifying the material to mold a first right multi-component plastic product 125b.

Figure 8. While locking together the right and intermediate molding blocks 106,105 by the right locking means 118, separating by the mold positioning system 103 to the left and intermediate molding blocks 104,105 and retaining the second left plastic component 122a on the second left general mold cavity part 115, and ejecting the first left product123a.

Rotating revolvable section 126 of the left molding block 104 pivoting around the centre axis 128 of the injection molding system by a left rotational means, not shown, and combining by the mold positioning system 103 molding blocks 104,105,106 to obtain the same mold position as described in the beginning of the production cycle.

While the above description contains many specificities, these should not be construed as limitations on the scope of the invention, but rather a exemplifications of the preferred embodiment thereof. Many other variations are possible.

There may be more than two injection units used and more than three molding blocks, with one more injection unit and one more molding block, three component products may be made. With two more injection units and two more molding blocks, four component products may be made. The molding blocks may be operated in such a fashion that two stack-molds are disposed for axial movement in respect to each other. The injection units may be placed in many different constellations, vertically, horizontally, along the machine axis or perpendicular thereto, or different angles altogether. When using a standard injection molding machine for the method of the invention, the injection units will normally have to be separated from the intermediate molding block at some period of the production cycle, but it is possible to operate the invention with the injection units attached to the intermediate molding block.

If it is necessary to apply hold pressure during a period when an injection unit is detached from the intermediate molding block, it is possible to apply hold pressure to a runner system by constricting the runner system and applying alternative hold pressure by a piston means.

The opening and closing periods may be different from the preferred embodiment, it is, for example, possible for the left side to open two or three times every time the right side opens once. It is possible to produce a different product in the left side and the right side, as, for example, a container and a lid both needing two barrier materials for such properties as moisture, oxygen, carbon dioxide, solutions, and air, for products such as foods, carbonated drinks, paints and vacuumated blood tubes.

The runner systems may consist of forked or unconnected sections or sections separated by valves of many types. It may be useful to include a controlled valve near or at the gate to each product, although this feature is optional. To start up the system without such valves, either double material is injected the first time or a previously produced product is inserted in half of the mold cavities.

There may be any convenient amount of general mold cavity parts which in turn is exposed to the gated mold cavity parts. If, for example, there are three general and two gate mold cavity parts, the extra general mold cavity part may be used as a separate station for printing or in line blow molding or the like.

## Claims

1. A Method of cyclic injection molding a multi-component product in an injection molding system comprising a mold positioning system (103), a first injection system (101) and a second injection system (102), and a left molding block (104), a right molding block (106) and an intermediate molding block (105) located between the left and the right molding blocks, said blocks being disposed for axial movement in respect to each other,
the left molding block defining a first left general mold cavity part (107) and the intermediate molding block defining a first left gated mold cavity part (108) and a second left gated mold cavity part (109),
the right molding block defining a first right general mold cavity part (110) and the intermediate molding block defining a first right gated mold cavity part (111) and a second right gated mold cavity part (112),
the intermediate molding block defining a first runner system (113) and a second runner system (114) connected to said gated mold parts, the method comprising the steps of:
(a) combining by the mold positioning system (103) said molding blocks (104, 105, 106) so that the first left general mold cavity part (107) is connected with the first left gated mold cavity part (108) to form a first left mold cavity (119),
(b) injecting by the first injection system (101) via the first runner system (113) a first fluid plastic material into the first left mold cavity (119), and solidifying the material to produce a first left plastic component (122),
(c) separating by the mold positioning system (103) the right and intermediate molding blocks (106, 105),
(d) combining by the mold positioning system (103) said molding blocks (104, 105, 106) so that the first right general mold cavity part (110) is connected with the first right gated mold cavity part (111) to form a first right mold cavity (129),
(e) injecting by the first injection system (101) via the first runner system (113) first fluid plastic material into the first right mold cavity (129), and solidifying the material to produce a first right plastic component (124a),
(f) separating by the mold positioning system (103) the left and intermediate molding blocks (104, 105), retaining the first left plastic component (122) on the first left general mold cavity part (107),
(g) combining by the mold positioning system (103) said molding blocks (104, 105, 106) so that the first left general mold cavity part (107) is connected with the second left gated mold cavity part (109) to form a second left mold cavity (132), which encompasses said first left plastic component (122),
(h) injecting by the second injection system (102) via the second runner system (114) a second fluid plastic material into the second left mold cavity (132) so that the second fluid plastic is united with the first left plastic component (122) and solidifying the material to mold a first left multi-component plastic product (123a),
(i) separating by the mold positioning system (103) the right and intermediate molding blocks (106, 105), retaining the first right plastic component (124a) on the first right general mold cavity part (110),
(j) combing by the mold positioning system (103) said molding blocks (104, 105, 106) so that the first right general mold cavity part (110) is connected with the second right gated mold cavity part (112) to form a second right mold cavity (134), which encompasses said first right plastic component (124a),
(k) injecting by the second injection system (102) via the second runner system (114) second fluid plastic material into the second right mold cavity (134) so that the second fluid plastic is united with the first right plastic component (124a) and solidifying the material to mold a first right multi-component plastic product (125b),
(l) separating by the mold positioning system (103) the left and intermediate molding blocks (104, 105), to eject the first left product (123a) molded in step (h),
wherein step (c) comprises the step of
(m) ejecting a first right product (125) molded in step (k) of the preceding molding cycle.

2. A method according to claim 1, wherein the left molding block (104) defines at least one second left general mold cavity part (115) and the right molding block (106) defines at least one second right general mold cavity part (116), and comprising the steps of:
wherein step (g) comprises the step of
(n) combining by the mold positioning system (103) said molding blocks (104, 105, 106) so that one of said at least one second left general mold cavity part (115) is connected with the first left gated mold cavity part (108) to form a third left mold cavity (131),
wherein step (h) comprises the step of
(o) injecting by the first injection system (101) via the first runner system (113) first fluid plastic material into the third left mold cavity (131), and solidifying the material to produce a second left plastic component (122a),
wherein step (i) comprises the step of
(p) separating by the mold positioning system (103) the right and intermediate molding blocks (106, 105),
wherein step (j) comprises the step of
(q) combining by the mold positioning system (103) said molding blocks (104, 105, 106) so that one of said at least one second right general mold cavity part (116) is connected with the first right gated mold cavity part (111) to form a third right mold cavity (133),
wherein step (k) comprises the step of
(r) injecting by the first injection system (101) via the first runner system (113) first fluid plastic material into said third right mold cavity (133), and solidifying the material to produce a second right plastic component (124b),
wherein step (I) comprises the step of
(s) separating by the mold positioning system (103) the left and intermediate molding blocks (104, 105), retaining the second left plastic component (122a) on said second left general mold cavity part (115),
wherein step (a) of the following cycle comprises the step of
(t) combining by the mold positioning system (103) said molding blocks so that any one of said at least one left general mold cavity part (107, 115) is connected with the second left gated mold cavity part (108) to form a fourth left mold cavity (120), which encompasses said second left plastic component (121),
wherein step (b) of the following cycle comprises the step of
(u) injecting by the second injection system (102) via the second runner system (114) second fluid plastic material into the fourth left mold cavity (120) so that the second fluid plastic is united with the second left plastic component (121) and solidifying the material to mold a second left multi-component plastic product (123),
wherein step (c) of the following cycle comprises the step of
(v) separating by the mold positioning system (103) the right and intermediate molding blocks (106, 105), retaining the second right plastic component (124) on any one of said at least one right general mold cavity part (110, 116),
wherein step (d) of the following cycle comprises the step of
(w) combining by the mold positioning system (103) said molding blocks (104, 105, 106) so that any one of said at least one right general mold cavity part (110, 116) is connected with the second right gated mold cavity part (112) to form a fourth right mold cavity (130), which encompasses said second right plastic component (124),
wherein step (e) of the following cycle comprises the step of
(x) injecting by the second injection system (102) via the second runner system (114) second fluid plastic material into the fourth right mold cavity (130) so that the second fluid plastic is united with the second right plastic component (124) and solidifying the material to mold a second right multi-component plastic product (125a),
wherein step (f) of the following cycle comprises the step of
(y) separating by the mold positioning system (103) the left and intermediate molding blocks (104, 105), to eject the second left product (123) molded in step (u),
wherein step (p) comprises the step of
(z) ejecting a second right product (125a) molded in step (e).

3. A method according to claim 2, wherein the method utilizes only one second left general mold cavity part (115) and the method utilizes only one second right general mold cavity part (116).

4. An injection molding apparatus for cyclic injection molding a multi-component product comprising a mold positioning system (103), a first injection system (101) and a second injection system (102), and a left molding block (104), a right molding block (106) and an intermediate molding block (105) located between the left and the right molding blocks, said blocks being disposed for axial movement in respect to each other, the left molding block defining a first left general mold cavity part (107) and the intermediate molding block defining a first left gated mold cavity part (108) and a second left gated mold cavity part (109), the right molding block defining a first right general mold cavity part (110) and the intermediate molding block defining a first right gated mold cavity part (111) and a second right gated mold cavity part (112), the injection molding apparatus comprising:
a mold positioning system (103) for combining said molding blocks (104, 105, 106) so that the first left general mold cavity part (107) is connected with the first left gated mold cavity part (108) to form a first left mold cavity (119),
the first injection system (101) comprising means for injecting a first fluid plastic material into the first left mold cavity (119), to produce a left plastic component (122, 122a),
the mold positioning system (103) comprising means for separating the right and intermediate molding blocks (106, 105),
means for ejecting a right multi-component plastic product (125, 125a),
the mold positioning system (103) comprising means for combining said molding blocks (104, 105, 106) so that the first right general mold cavity part (110) is connected with the first right gated mold cavity part (111) to form a first right mold cavity (129),
the first injection system (101) comprising means for injecting first fluid plastic material into the first right mold cavity (129) to produce a right plastic component (124, 124a),
the mold positioning system (103) comprising means for separating the left and intermediate molding blocks (104, 105),
means for retaining said left plastic component (122, 122a) on the first left general mold cavity part (107),
the mold positioning system (103) comprising means for combining said molding blocks (104, 105, 106) so that the first left general mold cavity part (107) is connected with the second left gated mold cavity part (109) to form a second left mold cavity (132), so that the second left mold cavity (132) may encompass said left plastic component (122, 122a),
the second injection system (102) comprising means for injecting second fluid plastic material into the second left mold cavity (132) so that the second fluid plastic may be united with said left plastic component (122, 122a), to mold a left multi-component plastic product (123, 123a),
means for retaining said right plastic component (124, 124a) on the first right general mold cavity part (110), when the mold positioning system (103) separates the right and intermediate molding blocks (106, 105),
the mold positioning system (103) comprising means for combining said molding blocks (104, 105, 106) so that the first right general mold cavity part (110) is connected with the second right gated mold cavity part (112) to form a second right mold cavity (134), so that the second right mold cavity may encompass said right plastic component (124, 124a),
the second injection system (102) comprising means for injecting second fluid plastic material into the second right mold cavity (134) so that the second fluid plastic may be united with said right plastic component (124, 124a) to mold a right multi-component plastic product (125b),
means for ejecting the left multi-component plastic product (123, 123a), when the mold positioning system (103) separates the left and intermediate molding blocks (104, 105).

## Patentansprüche

1. Verfahren zum zyklischen Spritzgiessen eines Mehrkomponentenprodukts in einem Spritzgiesssytem, welches ein Formpositioniersystem (103), ein erstes Einspritzsystem (101), ein zweites Einspritzsystem (102), einen linken Ausformblock (104), einen rechten Ausformblock (106) und einen Zwischenausformblock (105) aufweist, der zwischen dem linken und dem rechten Ausformblock positioniert ist, wobei die Blöcke für eine Axialbewegung bezüglich einander angeordnet sind,
- der linke Ausformblock einen ersten linken gesamten Formhohlraumteil (107) und der Zwischenausformblock einen ersten linken angeschnittenen Formhohlraumteil (108) und einen zweiten linken angeschnittenen Formhohlraumteil (109) bildet,
- der rechte Ausformblock einen ersten rechten gesamten Formhohlraumteil (110) und der Zwischenausformblock einen ersten rechten angeschnittenen Formhohlraumteil (111) und einen zweiten rechten angeschnittenen Formhohlraumteil (112) bildet,
- der Zwischenausformblock ein erstes Einspritzkanalsystem (113) und ein zweites Einspritzkanalsystem (114) bildet, die mit den angeschnittenen Formteilen verbunden sind, und
- das Verfahren die Schritte aufweist:
(a) Zusammenfügen der Ausformblöcke (104, 105, 106) durch das Formpositioniersystem (103) derart, dass der erste linke gesamte Formhohlraumteil (107) mit dem ersten linken angeschnittenen Formhohlraumteil (108) zur Bildung eines ersten linken Formhohlraums (119) verbunden ist,
(b) Einspritzen eines ersten fluiden Kunststoffmaterials in den ersten linken Formhohlraum (119) durch das erste Einspritzsystem (101) über das erste Einspritzkanalsystem (113) und Verfestigenlassen des Materials zur Erzeugung einer ersten linken Kunststoffkomponente (122),
(c) Trennen des rechten Ausformblocks (106) und des Zwischenausformblocks (105) durch das Formpositioniersystem (103),
(d) Zusammenfügen der Ausformblöcke (104, 105, 106) durch das Formpositioniersystem (103) derart, dass der erste rechte gesamte Formhohlraumteil (110) mit dem ersten rechten angeschnittenen Formhohlraumteil (111) zur Bildung eines ersten rechten Formhohlraums (129) verbunden ist,
(e) Einspritzen des ersten fluiden Kunststoffmaterials in den ersten rechten Formhohlraum (129) durch das erste Einspritzsystem (101) über das erste Einspritzkanalsystem und Verfestigenlassen des Materials zur Erzeugung einer ersten rechten Kunstoffkomponente (124a),
(f) Trennen des linken Ausformblocks (104) und des Zwischenausformblocks (105) durch das Formpositioniersystem (103), wobei die erste linke Kunststoffkomponente (122) an dem ersten linken gesamten Formhohlraumteil (107) gehalten wird,
(g) Zusammenfügen der Ausformblöcke (104, 105, 106) durch das Formpositioniersystem (103) derart, dass der erste linke gesamte Formhohlraumteil (107) mit dem zweiten linken angeschnittenen Formhohlraumteil (109) zur Bildung eines zweiten linken Formhohlraums (132) verbunden ist, der die erste linke Kunststoffkomponente (122) umschliesst,
(h) Einspritzen eines zweiten fluiden Kunststoffmaterials in den zweiten linken Formhohlraum (132) durch das zweite Einspritzsystem (102) über das zweite Einspritzkanalsystem (104) derart, dass der zweite fluide Kunststoff mit der ersten linken Kunststoffkomponente (122) vereinigt wird, und Verfestigenlassen des Materials zur Formung eines ersten linken Mehrkomponenten-Kunststoffprodukts (123a),
(i) Trennen des rechten Ausformblocks (106) und des Zwischenausformblocks (105) durch das Formpositioniersystem (103), wobei die erste rechte Kunststoffkomponente (124a) an dem ersten rechten gesamten Formhohlraumteil (110) gehalten wird,
(j) Zusammenfügen der Ausformblöcke (104, 105, 106) durch das Formpositioniersystem (103) derart, dass der erste rechte gesamte Formhohlraumteil (110) mit dem zweiten rechten angeschnittenen Formhohlraumteil (112) zur Bildung eines zweiten rechten Formhohlraums (134) verbunden ist, der die erste rechte Kunststoffkomponente (124a) umschliesst,
(k) Einspritzen des zweiten fluiden Kunststoffmaterials in den zweiten rechten Formhohlraum (134) durch das zweite Einspritzsystem (102) über das zweite Einspritzkanalsystem (114) derart, dass der zweite fluide Kunststoff mit der ersten rechten Kunststoffkomponente (124a) vereinigt wird, und Verfestigenlassen des Materials zur Formung eines ersten rechten Mehrkomponenten-Kunststoffprodukts (125b),
(l) Trennen des linken Ausformblocks (104) und des Zwischenausformblocks (105) durch das Formpositioniersystem (103) zum Auswerfen des ersten linken Produkts (123a), das im Schritt (h) geformt wurde, und der Schritt (c) den Schritt aufweist
(m) Auswerfen eines ersten rechten Produkts (125), das im Schritt (k) des vorhergehenden Ausformzyklus geformt wurde.

2. Verfahren nach Anspruch 1, bei welchem der linke Ausformblock (104) wenigstens einen zweiten linken gesamten Formhohlraumteil (115) und der rechte Ausformblock (106) wenigstens einen zweiten rechten gesamten Formhohlraumteil (116) bilden und das Verfahren die Schritte aufweist, dass zu dem Schritt (g) der Schritt gehört:
(n) Zusammenfügen der Ausformblöcke (104, 105, 106) durch das Formpositioniersystem (103) derart, dass ein Teil des wenigstens einen zweiten linken gesamten Formhohlraumteils (115) mit dem ersten linken angeschnittenen Formhohlraumteil (108) zur Bildung eines dritten linken Formhohlraums (131) verbunden ist,
dass zu dem Schritt (h) der Schritt gehört:
(o) Einspritzen des ersten fluiden Kunststoffmaterials in den dritten linken Formhohlraum (131) durch das erste Einspritzsystem (101) über das erste Einspritzkanalsystem (113) und Verfestigenlassen des Materials zur Erzeugung einer zweiten linken Kunststoffkomponente (122a),
dass zu dem Schritt (i) der Schritt gehört:
(p) Trennen des rechten Ausformblocks (106) und des Zwischenausformblocks (105) durch das Formpositioniersystem (103),
dass zu dem Schritt (j) der Schritt gehört:
(q) Zusammenfügen der Ausformblöcke (104, 105, 106) durch das Formpositioniersystem (103) derart, dass ein Teil des wenigstens einen zweiten rechten gesamten Formhohlraumteil (116) mit dem ersten rechten angeschnittenen Formhohlraumteil (111) zur Bildung eines dritten rechten Formhohlraums (133) verbunden ist,
dass zu dem Schritt (k) der Schritt gehört:
(r) Einspritzen des ersten fluiden Kunststoffmaterials in den dritten rechten Formhohlraum (133) durch das erste Einspritzsystem (101) über das erste Einspritzkanalsystem (131) und Verfestigenlassen des Materials zur Erzeugung einer zweiten rechten Kunststoffkomponente (124b),
dass zu dem Schritt (I) der Schritt gehört:
(s) Trennen des linken Ausformblocks (104) des Zwischenausformblocks (105) durch das Formpositioniersystem (103), wobei die zweite linke Kunststoffkomponente (122a) an dem zweiten linken gesamten Formhohlraumteil (115) gehalten wird,
dass zu dem Schritt (a) des folgenden Zyklus der Schritt gehört:
(t) Zusammenfügen der Ausformblöcke durch das Formpositioniersystem (103) derart, dass irgendein Teil des wenigstens einen linken gesamten Formhohlraumteils (107, 115) mit dem zweiten linken angeschnittenen Formhohlraumteil (108) zur Bildung eines vierten linken Formhohlraums (120) verbunden ist, der die zweite linke Kunststoffkomponente (121) umschliesst,
dass zu dem Schritt (b) des folgenden Zyklus der Schritt gehört:
(u) Einspritzen des zweiten fluiden Kunststoffmaterials in den vierten linken Formhohlraum (120) durch das zweite Einspritzsystem (102) über das zweite Einspritzkanalsystem (114) derart, dass der zweite fluide Kunststoff mit der zweiten linken Kunststoffkomponente (121) vereinigt wird, und Verfestigenlassen des Materials zum Formen eines zweiten linken Mehrfachkomponenten-Kunststofferzeugnisses (123),
dass zu dem Schritt (c) des folgenden Zyklus der Schritt gehört:
(v) Trennen des rechten Ausformblocks (106) und des Zwischenausformblocks (105) durch das Formpositioniersystem (103), wobei die zweite rechte Kunststoffkomponente (124) an irgendeinem Teil des wenigstens einen rechten gesamten Formhohlraumteils (110, 116) gehalten wird,
dass zu dem Schritt (d) des folgenden Zyklus der Schritt gehört:
(w) Zusammenfügen der Ausformblöcke (104, 105, 106) derart, dass irgend ein Teil des wenigstens einen rechten gesamten Formhohlraumteils (110, 116) mit dem zweiten rechten angeschnittenen Formhohlraumteil (112) zur Bildung eines vierten rechten Formhohlraums (130) verbunden ist, der die zweite rechte Kunststoffkomponente (124) umschliesst,
dass zu dem Schritt (e) des folgenden Zyklus der Schritt gehört:
(x) Einspritzen des zweiten fluiden Kunststoffmaterials in den vierten rechten Formhohlraum (130) durch das zweite Einspritzsystem (102) über das zweite Einspritzkanalsystem (114) derart, dass der zweite fluide Kunststoff mit der zweiten rechten Kunststoffkomponente (124) vereinigt wird, und Verfestigenlassen des Materials zur Formung eines zweiten rechten Mehrkomponenten-Kunststoffprodukts (125a)
dass zu dem Schritt (f) des folgenden Zyklus der Schritt gehört:
(y) Trennen des linken Ausformblocks (104) und des Zwischenausformblocks (105) durch das Formpositioniersystem (103) zum Auswerfen des im Schritt (u) geformten zweiten linken Produkts (123), und
dass zu dem Schritt (p) der Schritt gehört:
(z) Auswerfen eines im Schritt (e) geformten zweiten rechten Produkts (125a).

3. Verfahren nach Anspruch 2, bei welchem nur ein zweiter linker gesamter Formhohlraumteil (115) und nur ein zweiter rechter gesamter Formhohlraumteil (116) verwendet wird.

4. Spritzgiessvorrichtung zum zyklischen Spritzgiessen eines Mehrkomponentenprodukts, mit einem Formpositioniersystem (103), mit einem ersten Einspritzsystem (101), mit einem zweiten Einspritzsystem (102), mit einem linken Ausformblock (104), mit einem rechten Ausformblock (106) und mit einem Zwischenausformblock (105), der zwischen dem linken Ausformblock und dem rechten Ausformblock angeordnet ist, wobei die Blöcke für eine Axialbewegung bezüglich einander angeordnet sind, der linke Ausformblock wenigstens einen linken gesamten Formhohlraumteil (107), der Zwischenausformblock einen ersten linken angeschnittenen Formhohlraumteil (108) und einen zweiten linken angeschnittenen Formhohlraumteil (109) bildet, der rechte Ausformblock einen rechten gesamten Formhohlraumteil (110) bildet, der Zwischenausformblock einen ersten rechten angeschnittenen Formhohlraum (111) und einen zweiten rechten angeschnittenen Formhohlraumteil (112) bildet, und wobei die Spritzgiessvorrichtung
- ein Formpositioniersystem (103) zum Zusammenfügen der Formblöcke (104, 105, 106) derart, dass der erste linke gesamte Formhohlraumteil (107) mit dem ersten linken angeschnittenen Formhohlraumteil (108) zur Bildung eines ersten linken Formhohlraums (119) verbunden ist,
- das erste Einspritzsystem (101) mit Einrichtungen zum Einspritzen eines ersten fluiden Kunststoffmaterials in den ersten linken Formhohlraum (119) zur Erzeugung einer linken Kunststoffkomponente (122, 122a),
- das Formpositioniersystem (103) mit Einrichtungen zum Trennen des rechten Ausformblocks (106) und des Zwischenausformblocks (105),
- Einrichtungen zum Auswerfen eines rechten Mehrkomponenten-Kunststoffprodukts (125, 125a),
- das Formpositioniersystem (103) mit Einrichtungen zum Zusammenfügen der Ausformblöcke (104, 105, 106) derart, dass der erste rechte gesamte Formhohlraumteil (110) mit dem ersten rechten angeschnittenen Formhohlraumteil (111) zur Bildung eines ersten rechten Formhohlraums (129) verbunden ist,
- das erste Einspritzsystem (101) mit Einrichtungen zum Einspritzen des ersten fluiden Kunststoffmaterials in den ersten rechten Formhohlraum (129) zur Erzeugung einer rechten Kunststoffkomponente (124, 124a),
- das Formpositioniersystem (103) mit Einrichtungen zum Trennen des linken Ausformblocks (104) und des Zwischenausformblocks (105),
- Einrichtungen zum Halten der linken Kunststoffkomponente (122, 122a) an dem ersten linken gesamten Hohlraumteil (107),
- das Formpositioniersystem (103) mit Einrichtungen zum Zusammenfügen der Ausformblöcke (104, 105, 106) derart, dass der erste linke gesamte Formhohlraumteil (107) mit dem zweiten linken angeschnittenen Formhohlraumteil (109) zur Bildung eines zweiten linken Formhohlraums (132) verbunden ist, so dass der zweite linke Formhohlraum (132) die linke Kunststoffkomponente (122, 122a) umschliessen kann,
- das zweite Einspritzsystem (102) mit Einrichtungen zum Einspritzen des zweiten fluiden Kunststoffmaterials in den zweiten linken Formhohlraum (132), so dass der zweite fluide Kunststoff mit der linken Kunststoffkomponente (122, 122a) zur Formung eines linken Mehrkomponenten-Kunststoffprodukts (123, 123a) vereinigt werden kann,
- Einrichtungen zum Halten der rechten Kunststoffkomponente (124, 124a) an dem ersten rechten gesamten Formhohlraumteil (110), wenn das Formpositioniersystem (103) den rechten Ausformblock (106) und den Zwischenausformblock (105) trennt,
- das Formpositioniersystem (103) mit Einrichtungen zum Zusammenfügen der Ausformblöcke (104, 105, 106) derart, dass der erste rechte gesamte Formhohlraumteil (110) mit dem zweiten rechten angeschnittenen Formhohlraumteil (112) zur Bildung eines zweiten rechten Formhohlraums (134) verbunden ist, so dass der zweite rechte Formhohlraum die rechte Kunststoffkomponente (124, 124a) umschliessen kann,
- das zweite Einspritzsystem (102) mit Einrichtungen zum Einspritzen des zweiten fluiden Kunststoffmaterials in den zweiten rechten Formhohlraum (134), so dass der zweite fluide Kunststoff mit der rechten Kunststoffkomponente (124, 124a) zur Formung eines rechten Mehrkomponenten-Kunststoffprodukts (125b) vereinigt werden kann, und
- Einrichtungen zum Auswerfen des linken Mehrkomponenten-Kunststoffprodukts (123, 123a) aufweist, wenn das Formpositioniersystem (103) den linken Ausformblock (104) und den Zwischenausformblock (105) trennt.

## Revendications

1. Procédé de moulage cyclique par injection d'un produit multicomposant dans un système de moulage par injection comprenant un système de positionnement de moule (103), un premier système d'injection (101) et un second système d'injection (102), et un bloc de moulage gauche (104), un bloc de moulage droit (106) et un bloc de moulage intermédiaire (105) situé entre les blocs de moulage gauche et droit, lesdits blocs étant aptes au mouvement axial l'un par rapport à l'autre,
le bloc de moulage gauche définissant une première partie de moule général gauche (107) et le bloc de moulage intermédiaire définissant une première partie de cavité de moule divisé gauche (108) et une seconde partie de cavité de moule divisé gauche (109),
le bloc de moulage droit définissant une première partie de cavité de moule général droite (110) et le bloc de moulage intermédiaire définissant une première partie de cavité de moule divisé droite (111) et une seconde partie de cavité de moule divisé droite (112),
le bloc de moulage intermédiaire définissant un premier système d'alimentation (113) et un second système d'alimentation (114) raccordé auxdites parties de moule divisé, le procédé comprenant les étapes consistant à :
(a) combiner par le système de positionnement de moule (103) lesdits blocs de moulage (104, 105, 106) de façon que la première partie de cavité de moule général gauche (107) soit raccordée à la première partie de cavité de moule divisé gauche (108) pour former une première cavité de moule gauche (119),
(b) injecter par le premier système d'injection (101), via le premier système d'alimentation (113), un premier matériau plastique fluide dans la première cavité de moule gauche (119), et solidifier le matériau pour produire un premier composant plastique gauche (122),
(c) séparer par le système de positionnement de moule (103) les blocs de moulage droit et intermédiaire (106, 105),
(d) combiner par le système de positionnement de moule (103) lesdits blocs de moulage (104, 105, 106) de façon que la première partie de cavité de moule général droite (110) soit raccordée à la première partie de cavité de moule divisé droite (111) pour former une première cavité de moule droite (129),
(e) injecter par le premier système d'injection (101), via le premier système d'alimentation (113), un premier matériau plastique fluide dans la première cavité de moule droite (129), et solidifier le matériau pour produire un premier composant plastique droit (124a),
(f) séparer par le système de positionnement de moule (103) les blocs de moulage gauche et intermédiaire (104, 105) en retenant le premier composant plastique gauche (122) sur la première partie de cavité de moule général gauche (107),
(g) combiner par le système de positionnement de moule (103) lesdits blocs de moulage (104, 105, 106) de façon que la première partie de cavité de moule général gauche (107) soit raccordée à la seconde partie de cavité de moule divisé gauche (119) pour former une seconde cavité de moule gauche (132) qui entoure ledit premier composant plastique gauche (122),
(h) injecter par le second système d'injection (102), via le second système d'alimentation (114), un second matériau plastique fluide dans la seconde cavité de moule gauche (132) de façon à réunir le second composant plastique fluide avec le premier composant plastique gauche (122), et solidifier le matériau pour mouler un premier produit plastique multicomposant gauche (123a),
(i) séparer par le système de positionnement de moule (103) les blocs de moulage intermédiaire et droit (106, 105) en retenant le premier composant plastique droit (124a) sur la première partie de cavité de moule général droite (110),
(j) combiner par le système de positionnement de moule (103) lesdits blocs de moulage (104, 105, 106) de façon que la première partie de cavité de moule général droite (110) soit raccordée à la seconde partie de cavité de moule ajustable droite (112) pour former une seconde cavité de moule droite (134) qui entoure ledit premier composant plastique droit (124a),
(k) injecter par le second système d'injection (102), via le second système d'alimentation (114), le second matériau plastique fluide dans la seconde cavité de moule droite (134), de façon à réunir le second composant plastique fluide au premier composant plastique droit (124a), et solidifier le matériau pour mouler un premier produit plastique multicomposant droit (125b),
(l) séparer par le système de positionnement de moule (103) les blocs de moulage gauche et intermédiaire (104, 105) pour éjecter le premier produit gauche (123a) moulé à l'étape (h), l'étape (c) comprenant l'étape consistant à
(m) éjecter un premier produit droit (125) moulé à l'étape (k) du cycle de moulage précédent.

2. Procédé selon la revendication 1, dans lequel le bloc de moulage gauche (104) définit au moins une seconde partie de cavité de moule général gauche (115) et le bloc de moulage droit (106) définit au moins une seconde partie de cavité de moule général droite (116), et comprend les étapes consistant à :
l'étape (g) comprenant l'étape consistant à
(n) combiner par le système de positionnement de moule (103) lesdits blocs de moulage (104, 105, 106) de telle sorte que l'une d'au moins une seconde partie de cavité de moule général gauche (115) soit raccordée à la première partie de cavité de moule divisé gauche (108) pour former une troisième cavité de moule gauche (131),
l'étape (h) comprenant l'étape consistant à
(o) injecter par le premier système d'injection (101), via le premier système d'alimentation (113), le premier matériau plastique fluide dans la troisième cavité de moule gauche (131), et solidifier le matériau pour produire un second composant plastique gauche (122a),
l'étape (i) comprenant l'étape consistant à
(p) séparer par le système de positionnement de moule (103) les blocs de moulage droit et intermédiaire (106, 105),
l'étape (j) comprenant l'étape consistant à
(q) combiner par le système de positionnement de moule (103) lesdits blocs de moulage (104, 105, 106) de sorte qu'au moins l'une de la seconde partie de cavité de moule général droite (116) soit raccordée à la première partie de cavité de moule ajustable droite (111) pour former une troisième cavité de moule droite (133),
l'étape (k) comprenant l'étape consistant à
(r) injecter par le premier système d'injection (101), via le premier système d'alimentation (113), un premier matériau plastique fluide dans ladite troisième cavité de moule droite (133), et solidifier le matériau pour produire un second composant plastique droit (124b),
l'étape (l) comprenant l'étape consistant à
(s) séparer par le système de positionnement de moule (103) les blocs de moulage gauche et intermédiaire (104, 105) en retenant le second composant plastique gauche (122a) sur ladite seconde partie de cavité de moule général gauche (115),
l'étape (a) du cycle suivant comprenant l'étape consistant à
(t) combiner par le système de positionnement de moule (103) lesdits blocs de moulage de sorte que l'une quelconque d'au moins une partie de cavité de moule général gauche (107, 115) soit raccordée à la seconde partie de cavité de moule divisé gauche (108) pour former une quatrième cavité de moule gauche (120) qui entoure ledit second composant plastique gauche (121),
l'étape (b) du cycle suivant comprenant l'étape consistant à
(u) injecter par le second système d'injection (102), via le second système d'alimentation (114), le second matériau plastique fluide dans la quatrième cavité de moule gauche (120) de sorte que le second composant plastique fluide est raccordé au second composant plastique gauche (121), et solidifier le matériau pour mouler un second produit plastique multicomposant gauche (123),
l'étape (c) du cycle suivant comprenant l'étape consistant à
(v) séparer par le système de positionnement de moule (103) les blocs de moulage droit et intermédiaire (106, 105) en retenant le second composant plastique droit (124) sur l'une quelconque d'au moins une partie de cavité de moule général droite (110, 116),
l'étape (d) du cycle suivant comprenant l'étape consistant à
(w) combiner par le système de positionnement de moule (103) lesdits blocs de moulage (104, 105, 106) de façon que l'une quelconque d'au moins une partie de cavité de moule général droite (110, 116) soit raccordée à la seconde partie de cavité de moule divisé droite (112) pour former une quatrième cavité de moule droite (130) qui entoure ledit second composant plastique droit (124),
ladite étape (e) du cycle suivant comprenant l'étape consistant à
(x) injecter par le second système d'injection (102), via le second système d'alimentation (114), un second matériau plastique fluide dans la quatrième cavité de moule droite (130) de sorte que le second composant plastique fluide est raccordé avec le second composant plastique droit (124), et solidifier le matériau pour mouler un second produit plastique multicomposant droit (125a),
l'étape (f) du cycle suivant comprenant l'étape consistant à
(y) séparer par le système de positionnement de moule (103) les blocs de moulage gauche et intermédiaire (104, 105) pour éjecter le second produit gauche (123) moulé à l'étape (u),
l'étape (p) comprenant l'étape consistant à
(z) éjecter un second produit droit (125a) moulé à l'étape (e).

3. Procédé selon la revendication 2, dans lequel le procédé n'utilise qu'une seconde partie de cavité de moule général gauche (115) et le procédé n'utilise qu'une seconde partie de cavité de moule général droite (116).

4. Appareil de moulage par injection pour le moulage par injection cyclique d'un produit multicomposant comprenant un premier système de positionnement de moule (103), un premier système d'injection (101) et un second système d'injection (102), et un bloc de moulage gauche (104), un bloc de moulage droit (106) et un bloc de moulage intermédiaire (105) situé entre les blocs de moulage gauche et droit, lesdits blocs étant aptes au mouvement axial l'un par rapport à l'autre, le bloc de moulage gauche définissant une première partie de cavité de moule général gauche (107) et le bloc de moulage intermédiaire définissant une première partie de cavité de moule divisé gauche (108) et une seconde partie de cavité de moule ajustable gauche (109), le bloc de moulage droit définissant une première partie de cavité de moule général droite (110) et le bloc de moulage intermédiaire définissant une première partie de cavité de moule divisé droite (111) et une seconde partie de cavité de moule divisé droite (112), l'appareil de moulage par injection comprenant :
un système de positionnement de moule (103) pour combiner lesdits blocs de moulage (104, 105, 106) de façon à raccorder la première partie de cavité de moule général gauche (107) à la première partie de cavité de moule divisé gauche (108) pour former une première cavité de moule gauche (119),
le premier système d'injection (101) comprenant des moyens pour injecter un premier matériau plastique fluide dans la première cavité de moulage gauche (119) pour produire un composant plastique gauche (122, 122a),
le système de positionnement de moule (103) comprenant des moyens pour séparer les blocs de moulage droit et intermédiaire (106, 105),
des moyens pour éjecter un produit plastique multicomposant droit (125, 125a),
le système de positionnement de moule (103) comprenant des moyens pour combiner lesdits blocs de moulage (104, 105, 106) de façon à raccorder la première partie de cavité de moule général droite (110) à la première partie de cavité de moule divisé droite (111) pour former une première cavité de moule droite (129),
le premier système d'injection (101) comprenant des moyens pour injecter un premier matériau plastique fluide dans la première cavité de moule droite (129) pour produire un composant plastique droit (124, 124a),
le système de positionnement de moule (103) comprenant des moyens pour séparer les blocs de moulage gauche et intermédiaire (104, 105),
des moyens pour retenir ledit composant plastique gauche (122, 122a) sur la première partie de cavité de moule général gauche (107),
le système de positionnement de moule (103) comprenant des moyens pour combiner lesdits blocs de moulage (104, 105, 106) de façon à raccorder la première partie de cavité de moule général gauche (107) à la seconde partie de cavité de moule divisé gauche (109) pour former une seconde cavité gauche (132) de sorte que la seconde cavité de moule gauche (132) peut entourer ledit composant plastique gauche (122, 122a),
le second système d'injection (102) comprenant des moyens pour injecter le second matériau plastique fluide dans la seconde cavité de moule gauche (132) de façon à pouvoir raccorder le second plastique fluide audit composant plastique gauche (122, 122a) pour mouler un premier produit plastique multicomposant (123, 123a),
des moyens pour retenir ledit composant plastique droit (124, 124a) sur la première partie de cavité de moule général droite (110) lorsque le système de positionnement de moule (103) sépare les blocs de moulage droit et intermédiaire (106, 105),
le système de positionnement de moule (103) comprenant des moyens pour combiner lesdits blocs de moulage (104, 105, 106) de façon à raccorder la première partie de cavité de moule général droite (110) à la seconde partie de cavité de moule divisé droite (112) pour former une seconde cavité de moule droite (134), de sorte que la seconde cavité de moule droite peut entourer ledit composant plastique droit (124, 124a),
le second système d'injection (102) comprenant des moyens pour injecter le second matériau plastique fluide dans la seconde cavité de moule droite (134) de façon à pouvoir raccorder le second plastique fluide audit composant plastique droit (124, 124a) pour mouler un produit plastique multicomposant droit (125b),
des moyens pour éjecter le produit plastique multicomposant gauche (123, 123a) lorsque le système de positionnement de moule (103) sépare les blocs de moulage gauche et intermédiaire (104, 105).
